# EUROPEAN PATENT APPLICATION

(11) **EP 2 346 233 A1**
(43) Date of publication of application: **20.07.2011**
(21) Application number: 08878356.8
(22) Date of filing: 03.11.2008
(51) Int. Cl.: H04M 1/2745

(54) **A METHOD AND SYSTEM FOR ALLOCATING MEMORY SPACE OF MOBILE TERMINAL**

(71) Applicant: ZTE Corporation, Shenzhen, Guangdong 518057 (CN)
(72) Inventor: TANG, Lei, Shenzhen Guangdong 518057 (CN); WANG, Haibo, Shenzhen Guangdong 518057 (CN)
(74) Representative: Office Freylinger
(86) International application number: PCT/CN2008/072915
(87) International publication number: WO 2010/060238

(57) **Abstract**

A method and a system for allocating memory space of a mobile terminal are provided. The system comprises: a user interface means configured to prompt a user to select a allocating mode of the memory space; a control means configured to store space dividing information in various allocating modes; a memory allocating means configured to clear the data of the whole space to be divided when the memory space is to be reallocated, to acquire according to an allocating mode selected by the user the space dividing information of the allocating mode stored in the control means, and to configure required memory space for storing various parts of information according to the space dividing information. The technical solution of the invention can allocate the memory space according to user requirement, and enable the space allocation and management of a mobile terminal to satisfy various requirements of individuals.

## Description

### Field of the Invention

The present invention relates to an allocation and management of memory space(s) of a mobile terminal, and specifically to a system and a method for allocating the memory space of a mobile terminal.

### Background of the Invention

The needs of current mobile terminal users on memory spaces of terminals mainly include telephone directory space, short message space, color message and system file (audio, video, picture, text, etc.) space, however, terminals of different models and grades have different dividing methods for the above memory spaces, among which some are featured by a large capacity phone directory and some take a huge multimedia space as a main brand. When users are selecting products, some users with many short messages may have a regret for a small short message capacity although they are satisfied with other aspects, a phone directory with a large capacity is a waste for general users while its file space is very small and is not sufficient when the users want to store some large files, and such disadvantages result in the loss of a certain market competitiveness for some products.

Hence, the prior art has the above defects, further, the allocation and management of the available memory space of a mobile terminal is not humanized, and the allocation and the management cannot be performed by the users according to individual needs.

### Summary of the Invention

The present invention provides a system and a method for allocating the memory space of a mobile terminal, which can allocate the memory space of the mobile terminal upon the requirements of a user.

The technical solution of the present invention is to provide a system for allocating the memory space of a mobile terminal; and the system comprises: a user interface means, configured to prompt a user to select an allocating mode of the memory spaces;
a controlling means, configured to store space dividing information in each allocating mode; and
a memory allocating means, configured to clear data of the whole space to be divided when the memory space are reallocated, to acquire, according to the allocating mode selected by the user, the space dividing information in the allocating mode stored in the controlling means, and to configure the memory space required for storing each part of information according to the space dividing information.

Further, the system further comprises an allocation determining means, configured to receive the allocating mode selected by the user, and to judge whether a current allocating mode is, when the user selects a predetermined mode, the predetermined mode selected by the user, wherein if it is determined to be yes, the operation ends, if no, the allocation determining means notifies the memory allocating means of the allocating mode selected by the user.

Further, the user interface means is further configured to prompt the user to input the space dividing information when the user selects a custom mode; and

the allocation determining means is also configured to receive the space dividing information input by the user, to judge whether the space dividing information is legal, and send the space dividing information to the controlling means for storage when the space divided by the user is legal.

Further, the system further comprises a buffering means, configured to record the current allocating mode of the system and information that needs to be backed up; and
the allocation determining means judging whether the current allocating mode is the predetermined mode selected by the user means that the allocation determining means reads the allocating mode recorded by the buffering means, and determines that the current allocating mode is the predetermined mode selected by the user if the allocating mode recorded is the same as the predetermined mode selected by the user.

Further, the allocation determining means judging whether the space dividing information is legal comprises a step of determining whether the following conditions are achieved, wherein the space dividing information is determined to be illegal if one of them is achieved:
whether the space required by the each part of information divided by the user exceeding a maximum limitation, whether a sum of the space required by the each part of information exceeding the maximum limitation, and whether the memory space divided for the each part of information being smaller than the memory space needed by the information.

Further, the system further comprises an abnormal processing means;
the controlling means is also configured to notify the abnormal processing means to perform recovery processing when the allocation of the memory space fails, in which the allocating mode selected by the user is carried; and
the abnormal processing means is configured to perform the recovery processing upon receiving a notification of performing recovery processing; wherein the recovery processing is referred to as retrying to reallocate the memory space according to the allocating mode selected by the user, and if the allocation is still unsuccessful after n times failure, allocating the memory space according to the allocating mode recorded by the buffering means, or allocating the memory space according to data in a read only ROM area.

Further, the system further comprises an initializing means;
the controlling means is also configured to store a backup flag bit which is used to indicate whether information backup is performed, and to notify the initializing means to initialize the mobile terminal after the memory space has been reallocated, in which the backup flag bit is carried; and
the initializing means is configured to initialize the mobile terminal after receiving the notification of initializing the mobile terminal, and to copy the information backed up in the buffering means according to the indication of the backup flag bit to a corresponding storage area in the system for storage.

The present invention also provides a method for allocating the memory space of a mobile terminal, comprising: the mobile terminal storing space dividing information in each allocating mode; after a user has selected a allocating mode of the memory space, if the memory space needs to be reallocated, firstly clearing data of the whole space to be divided, then acquiring the space dividing information stored in the allocating mode according to the allocating mode selected by the user, and configuring memory spaces required for storing each part of information according to the space dividing information.

Further, if the user selects a predetermined mode, firstly the mobile terminal judges whether the current allocating mode is the predetermined mode selected by the user; if it is determined to be yes, the operation is ended, if no, the memory space is reallocated according to the allocating mode selected by the user.

Further, if the user selects a custom mode, the mobile terminal prompts the user to input the space dividing information, then judges whether the space dividing information is legal, and stores the space dividing information if it is legal.

Further, the mobile terminal also records the current allocating mode of the system and information that needs to be backed up; and
the mobile terminal judging whether the current allocating mode is the predetermined mode selected by the user means that, if the recorded allocating mode is the same as the predetermined mode selected by the user, the current allocating mode is the predetermined mode selected by the user.

Further, judging whether the space dividing information is legal comprises a step of judging whether the following conditions are achieved, and the space dividing information is determined to be illegal if one of the following conditions is achieved:
whether the spaces required by the each part of information divided by the user exceeding a maximum limitation, whether a sum of the space required by the each part of information exceeding the maximum limitation, and whether the memory spaces divided for the each part of information being smaller than the memory spaces needed by the information.

Further, if a reallocation of the memory space fails, the mobile terminal also performs a recovery processing; and
the recovery processing is referred to a step of retrying to reallocate the memory space according to the allocating mode selected by the user, and if the allocation is still unsuccessful after n times failure, allocating the memory space according to the current allocating mode recorded by the mobile terminal, or allocating the memory space according to data in a read only ROM area.

Further, the mobile terminal also stores a backup flag bit which is used to indicate whether information backup is performed; and
the mobile terminal is initialized after the memory space is reallocated, and the information backed up is, according to the indication of the backup flag bit, copied to a corresponding storage area in the system for storage.

To sum up, the present invention provides a system and a method for allocating the memory space of a mobile terminal, which enable users to allocate and manage the memory space according to individual needs and improve users' experience.

### Brief Description of the Accompanying Drawings

Figure 1 is a schematic figure of the structure of a system of the present invention; and
Figure 2 is a flow chart of the method of the present invention.

### Detailed Description of the Embodiments

The present invention provides a system and a method for allocating memory space(s) of a mobile terminal; the mobile terminal stores space dividing information in each allocating mode; after a user has selected a allocating mode of the memory space, if the memory space needs to be reallocated, firstly clears data of the whole space to be divided, then acquires the space dividing information stored in the allocating mode according to the allocating mode selected by the user, and configures memory spaces required for storing each part of information according to the space dividing information.

The technical solution of the present invention will be described in detail hereinafter in conjunction with the accompanying drawings and the embodiments.

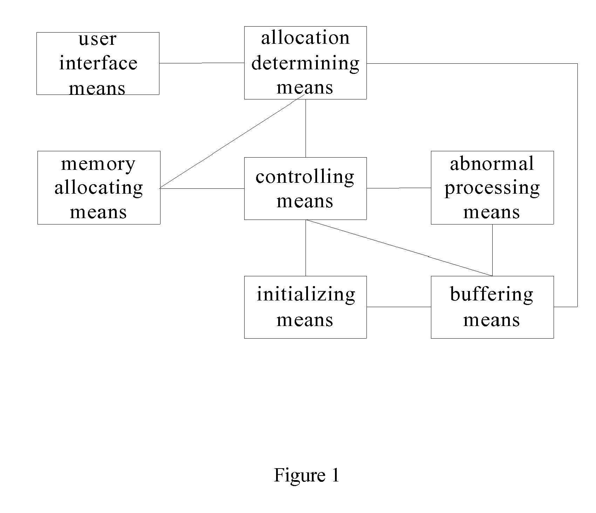

The present embodiment provides a system for allocating the memory space(s) of a mobile terminal; and as shown in Figure 1, the system comprises a user interface means, a buffering means, an allocation determining means, a controlling means, a memory allocating means, an abnormal processing means and an initializing means.

The user interface means is configured to prompt a user to select the allocating mode of the memory space; the modes available for selection comprise a predetermined mode and a custom mode; the predetermined mode is a mode recommended by the system and may comprise a large capacity phone directory user mode, a multi-SMS user mode, a general user mode and etc., the custom mode is a mode in which the user divides the space by himself/herself; the user interface means is also configured to prompt a user to input the space dividing information when the user has selected the custom mode; the space dividing information is referred to as spaces for storing information of various parts, such as the space storing the phone directory, the space storing the SMS, the space storing the system files and etc.; the user interface means can also be configured to prompt the user "this function will format the memory space of the system; all data except the phone directory will be cleared, are you sure?" before the user selects the allocating mode; and if the user selects no, the system will be quit and it returns to the catalogue, and the operation is ended. The user interface means can also be configured to prompt the user whether to perform backup to the phone directory before the memory space is reallocated and to prompt the user whether the allocation of the memory space is successful after the memory space is reallocated.

The buffering means is configured to record a current allocating mode and information to be backed up when reallocating the memory space, for example, the phone directory and/or other important information.

The allocation determining means is configured to receive the allocating mode selected by the user, and determine, after the user has selected a predetermined mode, whether the predetermined mode is the current mode; if it is determined to be yes, the system will be quit and it returns to the catalogue, and the operation is ended, if no, the allocation determining means notifies the memory allocating means of the allocating mode selected by the user, and judging whether the current allocating mode is the predetermined mode selected by the user is referred to as that the allocation determining means reads the allocating mode recorded by the buffering means, and determines the current allocating mode is the predetermined mode selected by the user if the allocating mode recorded is the same with the predetermined mode selected by the user.

The allocation determining means is also configured to receive the space dividing information input by the user when the user has selected the custom mode, judge whether the space dividing information is legal; and send the space dividing information to the controlling means for storage when it is legal, and determining whether the space dividing information is legal comprises a step of determining whether the following conditions are achieved, and the space dividing information is illegal if one of them is achieved: whether the space required by the each part of information divided by the user exceeding a maximum limitation, whether a sum of the space required by the each part of information exceeding the maximum limitation, and whether the memory space divided being smaller than the memory space needed by the information.

The controlling means is configured to store the space dividing information in each allocating mode, comprising the space dividing information in the custom mode set by the user and the predetermined mode of the system; the space dividing information is referred to as space that store information of various parts, for example, the memory space required for storing the phone directory, the memory space required for storing the SMS, the space required for storing the system files and etc., and the information such as the backup flag bit which is used to indicate whether an information backup is performed and the capacity of the phone directory which is referred to as the capacity of the phone directory that has been backed up; the controlling means can also be configured to notify the abnormal processing means to perform a recovery processing when the allocation of the memory space fails, carry the allocating mode selected by the user, and to modify the current allocating mode recorded by the buffering means after the reallocation of the memory space is successful. It can also be configured to notify the initializing means to initialize the mobile terminal after reallocating the memory space, and carry the backup flag bit.

The memory allocating means is configured to clear data of the whole space to be divided when the memory space are reallocated, to acquire, according to the allocating mode selected by the user, the space dividing information in the allocating mode stored in the controlling means, and to configure the memory space required for storing each part of information according to the space dividing information, such as configuring the memory space required for storing the phone directory and the memory space required for storing SMSs, and specifically, configuring relevant initial values of the memory space to be divided according to the space dividing information, that is, the value mapped by the memory address in a memory and a register.

The abnormal processing means is configured to perform the recovery processing upon receiving a notification of performing recovery processing; wherein the recovery processing may comprises retrying to reallocate the memory space according to the allocating mode selected by the user, and if the allocation is still unsuccessful after n times failure, allocating the memory space according to the allocating mode recorded by the buffering means, i.e., returning back to the allocating mode before the reallocation, n can be set according to requirements, for example, it is set as 3; preferably, the memory space is allocated according to the data in an ROM (read only) area (the ROM area is not shown in the drawings), that is, returning back to a default allocating mode of the system, and the ROM area stores the value of a default memory configuration of the system.

The initializing means is configured to initialize the mobile terminal after receiving the notification of initializing the mobile terminal, and to copy the information backed up in the buffering means according to the indication of the backup flag bit to a corresponding storage area in the system for storage, for example, copying a backed up phone directory to a phone directory storage area of the system.

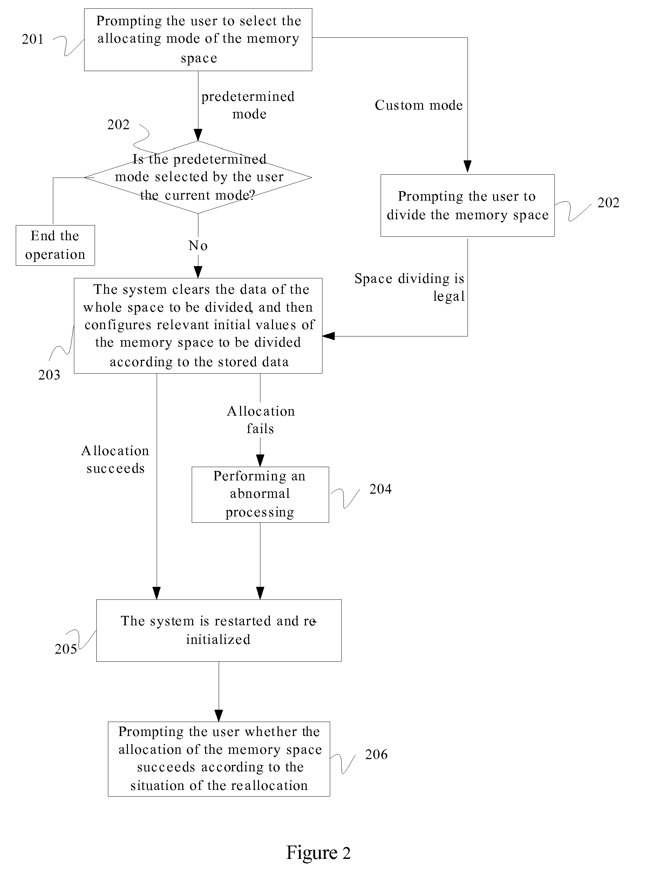

The present embodiment also provide a method for allocating the memory space of a mobile terminal, as shown in Figure 2, the method comprises the following steps.

Step 201, a mobile terminal provides a user with an interface for selecting the allocating mode of the memory space, which prompts the user to select the predetermined mode or the custom mode; the predetermined mode is a mode recommended by the system and may comprise a large capacity phone directory user mode, a multi-SMS user mode, a general user mode and etc., and the custom mode is a mode in which the user inputs the memory spaces required for storing information of various parts by himself/herself; and then step 202 is executed.

Prior to executing this step, the user may has a notification, such as "this function will format the memory space of the system, and all data except the phone directory will be cleared, are you sure?"; if the user select "No", the system will be quit and return to the catalogue, and the operation is ended; and if the user selects "Yes", this step will be executed.

Herein a function of backing up the phone directory is provided; considering that the content of the phone directory is the most important information for a general user, a buffering area reserved by the system is set to store phone directory information; and the backup of other information can also be set in the case of needs by the users, which is not limited by the present invention.

Step 202, perform a processing upon the selection of the user.

If the predetermined mode is selected, according to the current mode recorded in the buffering area of the system, whether the current mode is the predetermined mode is judged, if it is determined to be yes, the user will be notified "the predetermined mode has already be used", then the system is quit and return to the catalogue, and the operation is ended; and if no, step 203 will be executed.

If the custom mode is selected: the user will be prompted to input the space dividing information, such as the space for storing the phone directory, the space for storing the SMSs and the space for storing the system file; and when the user has input the data and confirmed, the system judges whether the space dividing information is legal, which comprises a step of determining whether the following conditions are achieved, and the space dividing information is illegal if one of the following conditions is achieved: whether the space required by the each part of information divided by the user exceeding a maximum limitation, whether a sum of the space required by the each part of information exceeding the maximum limitation, and whether the memory space divided for the each part of information being smaller than the memory space needed by the information. If the space dividing information is illegal, the user will be notified "the space allocation fails, and please reallocate". For example, originally there are 500 records in the phone directory, the current capacity of the phone directory input by the user is 300, after a determination, the user will be notified "200 records of the phone directory will be lost, are you sure?". Judging whether the input value is correct (for example, it is defined that the input value can merely be an integral time of 10; it is illegal if the input value is not an integral time of 10) can be included. Legality determination can also comprise other situations, herein it is just an example, and does not intend to limit that the legality determination of the present invention can just be such situations. The space dividing information is stored if the space allocation of the user is legal, and then step 203will be executed.

Step 203, the system clears the data of the whole space to be divided, and then configures the relevant initial values of the memory space to be divided according to the stored space dividing information in the allocating mode, for example, the value mapped by the memory address in the memory and the register.

The division of the memory space of a mobile terminal is much different from the division of the space of the disks of a computer. Both are different from each other in the implementation mechanisms in a physical layer. Data in the space of the disks of the computer is stored in "cluster", while the phone directory and the SMS in the memory space of the mobile terminal are divided in pieces, and re-dividing will relate to re-arrangements of the address indexes of the phone directory and the SMS.

If the reallocation of the memory space fails, step 204 is executed; and step 205 is executed if the reallocation succeeds.

Prior to executing this step, the user can be prompted "Do you want to back up important information such as phone directory"; if the use selects Yes, the information that needs to be backed up is started to be copied to the buffering area reserved in the system, the backup flag bit configured to indicate whether an information backup has been performed is stored, and then step 203 is executed; and step 203 is directly executed if the user selects No.

Step 204, the mobile terminal performs an abnormal processing, which can comprise a step of trying again to reallocate the memory space according to the allocating mode selected by the user, if it is still unsuccessful after n times failure, the memory space is allocated according to the allocating mode stored by the buffering means, i.e., returning to the allocating mode before the reallocation, n can be set according to requirements, for example, it is set as 3; the memory space may also be allocated according to the data in an ROM area, that is, returning back to a default allocating mode of the system, and the ROM stores the value of a default memory configuration of the system. Then step 205 is executed.

Step 205, the system is restarted and initializes the mobile terminal, if the information has been backed up, the backup information stored in the buffering area of the system is copied to a corresponding storage area of the system for storage according to the indication of the backup flag bit. Then step 206 is executed.

Step 206: the user is notified whether the allocation of the memory space is successful according to the situation of the reallocation.

Of course, the present invention can have many other embodiments, and those skilled in the art may make various corresponding changes and variations to the present invention without departing from the spirit and essence of the present invention, and such corresponding changes and variations shall all be contained within the scope of protection of the claims of the present invention.

### Industrial Applicability

The present invention provides a mobile terminal and a method for allocating the memory space, which enable users to allocate the memory space according to requirements of the users, and then the allocation and the management of the space of a mobile terminal satisfy various individual needs.

## Claims

1. A system for allocating memory space of a mobile terminal, **characterized in that** the system comprises a user interface means, configured to prompt a user to select an allocating mode of the memory space;
a controlling means, configured to store space dividing information in each allocating mode; and
a memory allocating means, configured to clear data of the whole space to be divided when the memory space are reallocated, to acquire, according to the allocating mode selected by the user, the space dividing information in the allocating mode stored in the controlling means, and to configure the memory space required for storing each part of information according to the space dividing information.

2. The system according to claim 1, **characterized in that**
the system further comprises an allocation determining means, configured to receive the allocating mode selected by the user, and to judge whether a current allocating mode is, when the user selects a predetermined mode, the predetermined mode selected by the user, wherein if it is determined to be yes, the operation ends, if no, the allocation determining means notifies the memory allocating means of the allocating mode selected by the user.

3. The system according to claim 2, **characterized in that**
the user interface means is further configured to prompt the user to input the space dividing information when the user selects a custom mode; and
the allocation determining means is also configured to receive the space dividing information input by the user, to judge whether the space dividing information is legal, and send the space dividing information to the controlling means for storage when the space divided by the user is legal.

4. The mobile terminal according to claim 2, **characterized in that**
the system further comprises a buffering means, configured to record the current allocating mode of the system and information that needs to be backed up; and
the allocation determining means judging whether the current allocating mode is the predetermined mode selected by the user means that the allocation determining means reads the allocating mode recorded by the buffering means, and determines that the current allocating mode is the predetermined mode selected by the user if the allocating mode recorded is the same as the predetermined mode selected by the user.

5. The system according to claim 3, **characterized in that**
the allocation determining means judging whether the space dividing information is legal comprises a step of determining whether the following conditions are achieved, wherein the space dividing information is determined to be illegal if one of them is achieved:
whether the space required by the each part of information divided by the user exceeding a maximum limitation, whether a sum of the space required by the each part of information exceeding the maximum limitation, and whether the memory space divided for the each part of information being smaller than the memory space needed by the information.

6. The system according to claim 4, **characterized in that**
the system further comprises an abnormal processing means;
the controlling means is also configured to notify the abnormal processing means to perform recovery processing when the allocation of the memory space fails, in which the allocating mode selected by the user is carried; and
the abnormal processing means is configured to perform the recovery processing upon receiving a notification of performing recovery processing; wherein the recovery processing is referred to as retrying to reallocate the memory space according to the allocating mode selected by the user, and if the allocation is still unsuccessful after n times failure, allocating the memory space according to the allocating mode recorded by the buffering means, or allocating the memory space according to data in a read only ROM area.

7. The system according to claim 4, **characterized in that**
the system further comprises an initializing means;
the controlling means is also configured to store a backup flag bit which is used to indicate whether information backup is performed, and to notify the initializing means to initialize the mobile terminal after the memory space has been reallocated, in which the backup flag bit is carried; and
the initializing means is configured to initialize the mobile terminal after receiving the notification of initializing the mobile terminal, and to copy the information backed up in the buffering means according to the indication of the backup flag bit to a corresponding storage area in the system for storage.

8. A method for allocating memory space of a mobile terminal, comprising: the mobile terminal storing space dividing information in each allocating mode; after a user has selected a allocating mode of the memory space, if the memory space needs to be reallocated, firstly clearing data of the whole space to be divided, then acquiring the space dividing information stored in the allocating mode according to the allocating mode selected by the user, and configuring memory spaces required for storing each part of information according to the space dividing information.

9. The method according to claim 8, **characterized in that** the method further comprises:
if the user selects a predetermined mode, firstly the mobile terminal judging whether a current allocating mode is the predetermined mode selected by the user; if it is determined to be yes, the operation being ended, if no, the memory space being reallocated according to the allocating mode selected by the user.

10. The method according to claim 9, **characterized in that** the method further comprises:
if the user selects a custom mode, the mobile terminal prompting the user to input the space dividing information, then judging whether the space dividing information is legal, and storing the space dividing information if it is legal.

11. The method according to claim 9, **characterized in that**
the mobile terminal also records the current allocating mode of the system and information that needs to be backed up; and
the mobile terminal judging whether the current allocating mode is the predetermined mode selected by the user means that, if the recorded allocating mode is the same as the predetermined mode selected by the user, the current allocating mode is the predetermined mode selected by the user.

12. The method according to claim 10, **characterized in that**
judging whether the space dividing information is legal comprises a step of judging whether the following conditions are achieved, and the space dividing information is determined to be illegal if one of the following conditions is achieved:
whether the spaces required by the each part of information divided by the user exceeding a maximum limitation, whether a sum of the space required by the each part of information exceeding the maximum limitation, and whether the memory spaces divided for the each part of information being smaller than the memory spaces needed by the information.

13. The method according to claim 11, **characterized in that**
if a reallocation of the memory space fails, the mobile terminal also performs a recovery processing; and
the recovery processing is referred to as retrying to reallocate the memory space according to the allocating mode selected by the user, and if the allocation is still unsuccessful after n times failure, allocating the memory space according to the current allocating mode recorded by the mobile terminal, or allocating the memory space according to data in a read only ROM area.

14. The method according to claim 11, **characterized in that**
the mobile terminal also stores a backup flag bit which is used to indicate whether information backup is performed; and
the mobile terminal is initialized after the memory space is reallocated, and the information backed up is, according to the indication of the backup flag bit, copied to a corresponding storage area in the system for storage.
